# EUROPEAN PATENT APPLICATION

(11) **EP 1 367 319 A2**
(43) Date of publication of application: **03.12.2003**
(21) Application number: 03380126.7
(22) Date of filing: 27.05.2003
(51) Int. Cl.: F21S 9/03, F21V 23/04

(54) **Solar powered public lighting street light**

(30) Priority: 28.05.2002 ES 200201358
(71) Applicant: Stephan Frantzen, 50996 Köln (DE)
(72) Inventor: Stephan Frantzen, 50996 Köln (DE)
(74) Representative: De Arpe Fernandez, Manuel

(57) **Abstract**

Solar powered public lighting street light comprising a lamp post (10) for securing to the ground or a base (2); at least one support arm (11) with a lighting lamp (110) fastened to the lamp post (11); a battery of electric accumulators (12) fixed to the lamp post (10) by a support frame (13); photo-voltaic cell panels (14) electrically connected to the battery of accumulators (12) which are mounted on the lamp post (10) by means of a fitting framework (15) ; and a light sensitive electric breaker/switch (15), for connecting the battery of accumulators (12) depending on the light intensity around the street lamp either to the lighting lamp (110) or to the photo-voltaic panels (14) for recharging the said accumulators(12).

## Description

This invention refers to a public lighting street light powered by electric accumulators which are recharged by photo-voltaic cell panels provided to the effect.

One aim of the invention is to provide an autonomous street light to solve the public lighting problem in distant or difficult-to-access places where the conventional electric supply system is not available or is costly to install because of the orography of the site. A further aim of the invention is to provide a street light as an alternative or replacement for those supplied from the conventional electric system, to be used either in the event of a mains supply failure or to reduce conventional electric power consumption with the consequent reduction in environmental pollution caused when producing such electric power.

According to the invention, these tasks are achieved inasmuch as the said street light comprises:
- A lamp post for securing to the ground or a base;
- One support arm, at least, with a lamp, which support arm is secured to the lamp post;
- A battery of electric accumulators fastened to the lamp post by a support frame;
- Photo-voltaic cell panels electrically connected to the battery of accumulators and mounted on the lamp post by a fitting framework; and
- An electric, light sensitive breaker/switch which, depending on the light intensity around the lamp post, connects the battery of accumulators either to the lamp for providing lighting or to the photo-voltaic panels for recharging the said accumulators.

According to a further aspect of the invention, means of electric switching and control are available for optionally supplying the lamp either with power from the electric accumulators or through the conventional mains system, especially in the event of a conventional mains supply failure.

As mentioned at the beginning, an "autonomous" street light of this kind serves for providing public lighting in remote or difficult-to-access places where the conventional electric supply is not available or is costly to install due to difficulties in the ground layout.

Furthermore, a lamp post of this type can be used as an alternative or replacement with supply through its electric accumulators or the conventional mains supply in the event of possible failures in the latter or to reduce electric mains supply consumption.

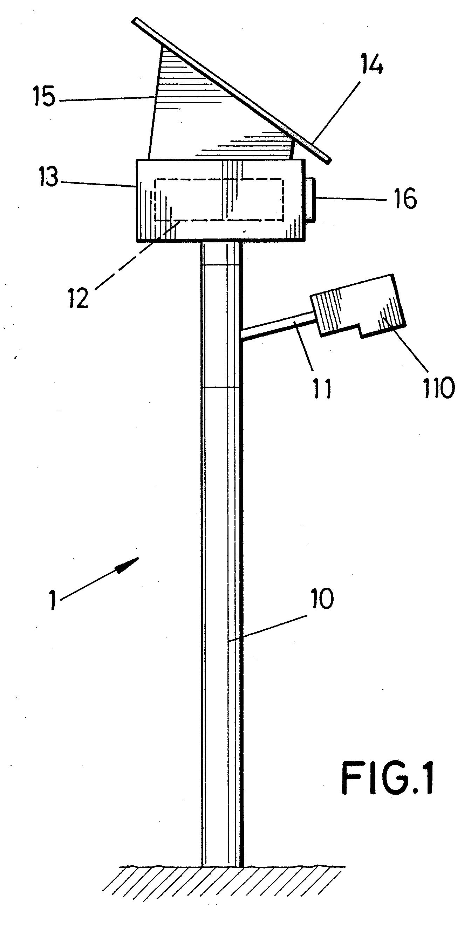

Other features and advantages of the invention will be more clear from the following description, which has been made with the aid of the attached drawings, relating to an example of a non limiting embodiment where:
The single figure shows a schematic diagram of a lamp post according to the invention.

3 As can be seen from the figure, the lamp post according to the invention which is designated in general with the numerical reference 1, comprises a lamp post 10 for securing to the ground 2 or a similar base on which is mounted at least one support arm 11 with a lighting lamp 110, a battery of electric accumulators 12 and a photo-voltaic cell panel 15.

In order to mount the battery of accumulators, a support framework 13 is provided secured to the lamp post 10, whilst the photo-voltaic panels are also supported on the said post 10 by a fitting framework.

According to the invention, a light sensitive electric breaker/switch 15 is provided, for example a dusk operating breaker/switch which enables the battery of accumulators 12 to be connected to the lighting lamp 110 when the light intensity around the lamp post is less than a first threshold which can be determined or to the photo-voltaic cell panel 14, when such light intensity is above a second threshold which can also be determined. With the purpose of providing a simple representation, this breaker/switch is shown in the drawing on the support 13 of the accumulators 12 without specifying the pertinent electrical connections that may be routinely provided by skilled persons in the art.

According to a further aspect of the invention, switching and control means 16 are provided which enable either the lighting lamp 110 to be supplied from the battery of accumulators or through the conventional electric supply mains when a supply failure is detected or when it is desired to make a mains electric power saving. As in the case of the breaker 15, these switching and control means 16 are also represented without the pertinent connections which may knowingly provided by a skilled person in the art.

Even when experts may choose the most suitable bases for each particular application of the invention, the following prove to be typical values for an embodiment thereof:
- A 80 to 500 W power saving lighting lamp,
- 80 Ah battery of accumulators; and y
- 80 CV photo-voltaic panels.

With the invention having been sufficiently described, it only remains to point out that the embodiments deriving from changes in shape, materials, replacement of functional items by their equivalents, as well as those resulting from a routine application of what has been disclosed above shall be considered as included in its sphere such that the invention will only be limited by the scope of the following claims.

## Claims

1. A solar powered public lighting street light **characterised in that** this light (1) comprises:
- a lamp post (10) for securing to the ground or a base (2);
- at least one support arm (11) with a lighting lamp (110) fastened to the lamp post (11);
- a battery of electric accumulators (12) fixed to the lamp post (10) by a support frame (13);
- photo-voltaic cell panels (14) electrically connected to the battery of accumulators (12) which are mounted on the lamp post (10) by means of a fitting framework (15); and
- a light sensitive electric breaker/switch (15), for connecting the battery of accumulators (12) depending on the light intensity around the street lamp either to the lighting lamp (110) or to the photo-voltaic panels (14) for recharging the said accumulators(12).

2. Street light as per the foregoing claim, **characterised in that** electric switching and control means (16) are provided enabling the lighting lamp (110) to be optionally supplied from the battery of accumulators (12) or through the conventional electric supply mains.

3. Street light as per claim 2, **characterised in that** the electric switching and control means (16) are provided to detect an electric mains supply failure and to thus connect the lighting lamp (110) to the battery of accumulators (12) in the event of a supply failure.
